# EUROPEAN PATENT APPLICATION

(11) **EP 1 342 860 A1**
(43) Date of publication of application: **10.09.2003**
(21) Application number: 02425126.6
(22) Date of filing: 05.03.2002
(51) Int. Cl.: E04B 2/76, E04B 2/74, E04B 2/78

(54) **Junction member between partition elements and partition comprising such a member**

(71) Applicant: International Office Concept S.r.l., 20034 Giussano (Milano) (IT)
(72) Inventor: Miksza, Krzysztof, 20158 Milano (IT)
(74) Representative: Ghioni, Carlo Raoul Maria

(57) **Abstract**

A junction member between partition elements comprises a first body (14) integral with a first element (31) of a partition (1) and provided with a first engagement end (12); a second body (15) mounted in a movable manner on the first body (14) and provided with a second engagement end (13). The second body (15) is movable between a first locking position at which the second end (13) faces the first (12), to clamp a second element (32) of a partition (1) therebetween, and a release position, to free said second element (32).

## Description

The present invention relates to a junction member between partition elements and to a partition comprising such a member.

It is known that in the building field and in that of interior decorations, partitions are often used that are intended to separate interior environments. Generally these partitions are employed for the purpose of dividing rooms into several regions to differentiate utilisation of same or isolate them from each other from an acoustic or visual point of view. In particular, partitions are used in office premises to divide big environments where arrangement of spaces is to be varied depending on fortuitous working requirements.

In many cases, on the contrary, taking into account the presently widespread new fashions in the furnishing field, these partitions are used as an element to create modern interior architectures. This is due to the valuable aesthetic effect of these partitions often made of glass or materials of a particularly agreeable visual appearance.

Partitions are known that are made of a grid framework to which panes or plates of glass and/or panels of an appropriate material are applied. The framework is formed of a plurality of upright posts joined together by means of horizontal crosspieces. Fastening of the crosspieces takes place by means of conventional connecting means, usually pegs, screws or bolts received in appropriate housings formed in the upright posts.

Also known are partitions made up of two mutually-facing frameworks to give the same self-support properties, between which plates of glass or other finishing panels are fixed.

In this type of partitions too, each framework is formed of vertical and horizontal beams mutually connected by conventional means.

The partitions in accordance with the known art briefly described above involve long times for setting up and in addition the operators assigned to installation must have a good manual ability.

In fact, use of conventional connecting means requires appropriate housings such as holes to be formed on assembling and attention must be paid to positioning of said housings to avoid the risk of having to discard unsuccessful elements.

If on the contrary these housings are formed while the partitions are being constructed, a diversified production is required based on the exact structure type for which the elements are to be employed.

In addition, fastening by conventional means is not very easy because each component, in particular in case of glass plates that are brittle, must be positioned and held in place during fastening, for which operation the presence of several workers is required.

Finally, screws and bolts that are usually carried in appropriate containers may get lost during installation.

Under this situation, the technical task underlying the present invention is to devise a junction member between partition elements capable of obviating the mentioned drawbacks.

In particular, it is an aim of the present invention to devise a junction member between partition elements of easy and quick setting up.

Another aim of the invention is to provide a junction member ensuring a safe and solid connection.

A further aim of the invention is to supply a partition that can be easily and quickly installed.

Finally, the present invention aims at devising a partition having a bearing structure that can consist of modules to be conveniently disposed depending on the construction requirements.

The technical task mentioned and the aims specified are achieved by a junction member between partition elements and by a partition comprising such a member having the features set out in one or more of the appended claims.

Description of a preferred but not exclusive embodiment of a junction member in accordance with the invention and of a partition comprising such a member is now given hereinafter, by way of non-limiting example, with reference to the accompanying drawings, in which:
- Fig. 1 is a diagrammatic perspective view of a partition equipped with a plurality of junction members in accordance with the invention;
- Fig. 2 is an enlarged perspective view of the concerned member;
- Fig. 3 is a plan view of the junction member shown in Fig. 2 associated with two elements of the partition in a first position that can be defined as a locking position, with some elements removed for a better view of others;
- Fig. 4 is a plan view of the junction member shown in Fig. 2 associated with two elements of the partition, in a second position that can be defined as a release position, with some elements removed for a better view of others.

With reference to the drawings, a partition in accordance with the present invention has been denoted at 1.

Partition 1 is made up of a grid support structure 2 substantially extending in a plane and formed of a plurality of beams 3, made of an aluminium alloy for example, to which covering panels 4 are fastened, said panels being made of wood, glass or other appropriate material depending on the function that partition 1 is intended to perform.

In particular, the support structure 2 comprises a first plurality of beams 3a and a second plurality of beams 3b joined to the beams 3 of the first plurality 3a by a plurality of junction members 5 operatively active therebetween.

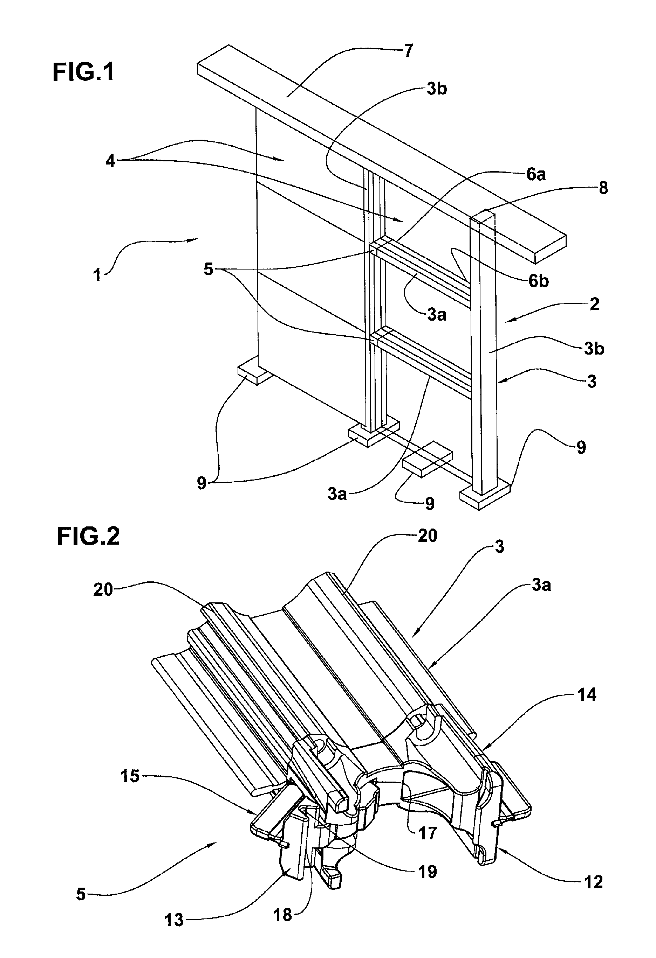

According to the embodiment shown in Fig. 1, the beams 3 of the first plurality 3a, or crosspieces, are horizontally disposed between the beams 3 of the second plurality 3b, referred to as posts, vertically extending over the whole height of partition 1 in a continuous manner.

Each crosspiece 3a is connected, at its opposite ends 6a, 6b, to the two posts 3b disposed alongside it by respective junction members 5.

Partition 1 further comprises a top connecting beam 7 joining the ends 8 of several posts 3a, and support means 9 to fix it to the ground or floor so as to ensure the necessary solidity to the whole structure 2.

Each junction member 5 is rigidly linked to a beam 3 of the first plurality of beams 3a, i.e. a crosspiece, by conventional connecting means 10, such as screws or operatively equivalent elements, and is in addition removably connected to a beam 3 of the second plurality of beams 3b, i.e. an upright post.

Advantageously, as clearly shown in Figs. 2, 3 and 4, the junction member 5 in plan view substantially has a U-shaped conformation defining a passage space 11, and first and second ends, 12 and 13 respectively, corresponding to the "U" ends and between which post 3b is removably fastened.

In particular, the junction member 5 comprises a first body 14 integral with the crosspiece 3a and carrying the first engagement end 12 to be secured to post 3b, and a second body 15 mounted in a movable manner on the first body 14 and carrying the second engagement end 13, to be secured to post 3b as well.

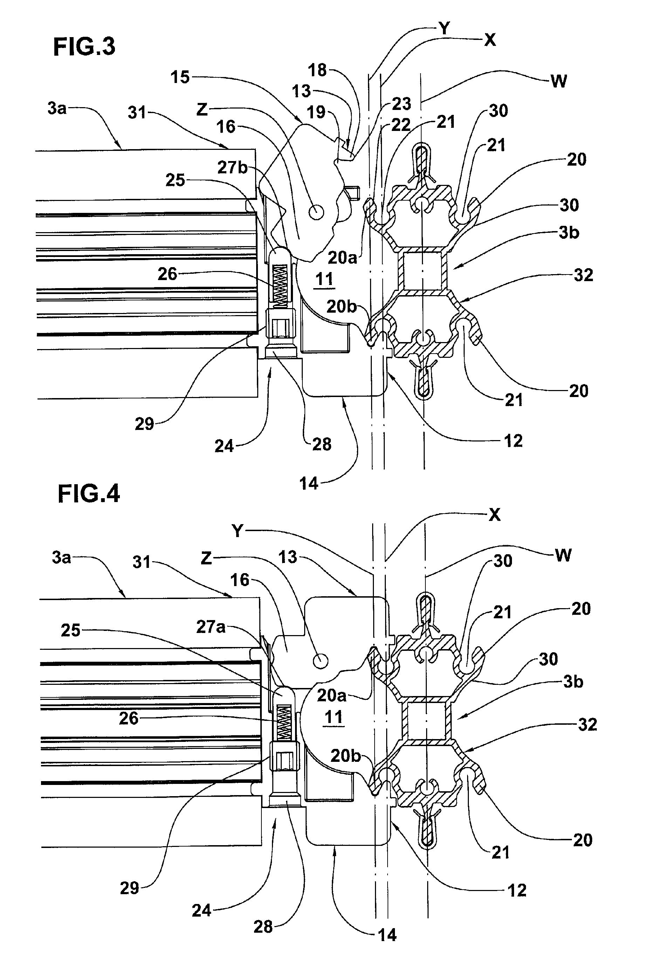

The second body 15 has a rear portion 16 (Figs. 3 and 4) opposite to the second engagement end 13 and is hinged on the first body 14 around a hinging axis Z, at a median region included between the second engagement end 13 and said rear portion 16.

Advantageously, the second body 15 can rotate around the hinging axis Z between two extreme positions, for the purpose of moving the two engagement ends 12, 13 close to or away from each other.

In the first position, that can be defined as a locking position (Fig. 4), the second end 13 faces the first end 12 along a reference direction X and is placed close to said first end 12, to clamp post 3b between the two ends 12, 13.

In the second position, that can be defined as a release position (Fig. 3), the second end 13 is offset with respect to the reference direction X and is placed away from said first end 12, to enable disengagement of post 3b from crosspiece 3a.

According to a preferred embodiment and as illustrated, the first body 14 has a width, measured along the reference direction X, that is substantially of same value as its depth and a thickness corresponding to about half its width. The first body 14 is in addition provided with a slit 17, formed in its thickness and within which the second body 15 is partly housed.

In fact, as clearly viewed from Fig. 2, the rear portion 16 and median region of the second body 15 are inserted in the slit 17 of the first body 14, whereas the second end 13 always keeps at the outside of said body.

Each of the two engagement ends 12, 13 has a tooth 18 defining a respective space 19 capable of receiving an engagement tailpiece 20 formed on post 3b.

In particular, post 3b comprises at least one first and one second engagement tailpieces 20a, 20b spaced apart from each other along an extension direction Y. The two tailpieces 20a, 20b extend in opposite directions away from each other so that they can be simultaneously coupled with the two ends 12, 13 of the junction member 5.

Therefore, in the first position, the pair of engagement tailpieces 20a, 20b is closed between the first 12 and second 13 ends. In addition, when the junction member 5 is in engagement with post 3b, the reference direction X and the extension direction Y are substantially coincident.

In more detail, each engagement tailpiece 20 defines a respective housing 21 so that, simultaneously with the tailpiece 20 being inserted in the space 19 of the junction member 5, the tooth 18 of the junction member 5 sets in the housing 21 of post 3b. Therefore, each tailpiece is coupled, at a coupling surface 22 thereof, with a coupling surface 23 of the ends 12, 13 of the junction member 5.

The second body 15 is stopped at the two extreme positions through appropriate restraining means 24. In particular, as shown in Figs. 3 and 4, this means 24 consists of a pusher element 25, mounted in the first body 14 and operatively active at the rear portion 16 of the second body 15.

The pusher element 25 is maintained in thrust relationship against the rear portion 16 of the second body 15 through spring means 26 and is alternately brought into engagement either with a first notch 27a of the rear portion 16, when the second body 15 is in the first position, or with a second notch 27b of said rear portion 16, when the second body 15 is in the second position.

The spring means 26 and pusher element 25 generate a torque with respect to the hinging axis Z which is capable of maintaining the second body 15 in each of the extreme positions at which it is, as far as said second body 15 is not urged by outer forces.

In the embodiment shown, the pusher element 25 preferably has a substantially end-rounded parallelepiped shape and is mounted in a hole 28 formed in the first body 14; the spring means 26 consists of a helical spring coaxial with the pusher element 25 itself.

To anchor the junction member 5 to post 3b, and the crosspiece 3a therewith, the junction member 5 is equipped with appropriate tightening means 29 capable of fastening the pusher element 25 to the first position, or locking position, of the second body 15.

The pusher element 25 locked to the just mentioned position, prevents opening of the two ends 12, 13 that remain fixedly linked to the engagement tailpieces 20a, 20b of post 3b.

In the preferred embodiment the tightening means 29 consists of a grub-screw previously mounted in hole 28 in coaxial relationship with the pusher element 25 and the helical spring 26. The grub-screw 29 can be screwed down until locking of the pusher element 25 against the first notch 27a of the second body 15.

Advantageously, the engagement tailpieces 20a, 20b extend over the whole length of post 3b, so as to enable locking of the junction member 5 at a plurality of positions along the longitudinal extension of the post 3b itself.

Preferably, as clearly shown in Figs. 3 and 4, each post 3b comprises two pairs of engagement tailpieces 20a, 20b and in addition in cross-section it shows a closed profile 30 mainly extending along an axis W parallel to the extension direction Y of said two pairs of engagement tailpieces 20a, 20b that are symmetrically disposed with respect to the axis W itself.

Advantageously, crosspieces 3a and posts 3b have the same cross section, i.e. they can be made starting from the same section members.

Finally it is important to point out that the junction member 5 in accordance with the present invention can be also used to join posts 3b to the top connecting beam 7 or, more generally, to mutually join a first element 31 of partition 1 and a second element 32, provided it is equipped with the pair of engagement tailpieces 20a, 20b as above detailed.

Assembling of the junction member 5 according to the invention described above mainly from a structural point of view is as follows.

After vertical and provisional installation of two posts 3b in adjacent position with the respective engagement tailpieces 20a, 20b facing each other, a crosspiece 3a is horizontally positioned therebetween, taking care that the second body 15 of each junction member 5 be in the release position.

The crosspiece 3a is moved close to posts 3b keeping the reference direction X of the junction member 5 parallel to the extension direction Y of the engagement tailpieces 20a, 20b.

Due to the crosspiece length the portion of said crosspiece 3a included between the two second ends 13, in the release position, exactly fits and passes between the two posts 3b, whereas each of the first ends 12 abuts against one of the two engagement tailpieces 20a of each post 3b.

Subsequently, the second body 15 of each junction member 5 is manually rotated, exerting pressure against the second end 13 towards the first end 12, to bring it to the second position, or locking position.

At this point, the ends 12, 13 of each member 5 are closed on the tailpieces 20a, 20b of post 3b and remain in place by effect of the restraining means 24. The action exerted by the spring means 26 on the pusher element 25 and the second body 15 is sufficiently high to keep the crosspiece 3a in position on the two posts 3b, but it also allows to make the engagement ends 12, 13 slide on the tailpieces 20a, 20b, to place the crosspiece 3a itself in a precise horizontal position, for example.

The crosspiece 3a is ultimately fastened by tightening the grub-screw 29 previously mounted in each junction member 5.

The above described steps are repeated for each crosspiece 3a.

The invention achieves important advantages.

It should be noted first of all that the junction member in accordance with the present invention enables an easy and quick assembling/disassembling of the connected parts, so that a lot of time is saved during the installation and the presence of operators of great manual ability is not required.

In fact, modifications to the parts during assembling, such as piercing of holes, are almost completely avoided as well as use of conventional connecting elements such as screws and bolts that are of difficult handling and can easily get lost.

The partition in accordance with the present invention can be therefore easily and readily installed.

In addition, in the case of union of crosspieces and posts, the junction member of the invention enables the crosspieces to be positioned to any height, by merely making them slide on the engagement tailpieces that in this case also act as guides, enabling accomplishment of different support structures with the same base components.

Furthermore, due to the fact that the tailpieces with which the ends are engaged are mutually spaced apart, transmission of torques between the connected elements is allowed, which makes connection very rigid. Specifically, this advantageous feature is particularly important in the connecting regions between posts and crosspieces (see Fig. 1), at the crosspiece portions on which the sliding doors are mounted, which doors due to their weight which is applied offset with respect to the longitudinal extension of the posts, generate twisting moments of great importance.

Finally, due to the particular U-shaped conformation of the junction member combined with the shape of the engagement tailpieces, there is a space which is included between the ends of the junction member and is such shaped as to enable passage of auxiliary components, guides for cables for example, alongside the structure posts.

## Claims

1. A junction member between partition elements
**characterized in that** it comprises:
- a first body (14) integral with a first element (31) of a partition (1) and having a first engagement end (12);
- a second body (15) mounted in a movable manner on the first body (14) and having a second engagement end (13); said second body (15) being movable between a first locking position at which the second engagement end (13) faces the first engagement end (12) and is placed close to said first end (12), to clamp a second element (32) of the partition (1) between the first (12) and second (13) ends, and a release position at which the second engagement end (13) is located away from the first end (12) to disengage said second element (32); and
- restraining means (24) to keep the second body (15) to the first position or to the second position.

2. A junction member as claimed in claim 1, **characterized in that** the second body (15) is hinged on the first body (14) so as to rotate between the first and second positions.

3. A junction member as claimed in claim 1, **characterized in that** the second body (15) has a rear portion (16) opposite to the second engagement end (13) and is hinged on the first body (14) around a hinging axis (Z) located at a median region included between the second engagement end (13) and said rear portion (16), so as to rotate between the first and second positions.

4. A junction member as claimed in claim 1, **characterized in that** the first engagement end (12) and second engagement end (13) each comprise a tooth (18) to be received in a respective housing (21) formed in the second element (32) and a space (19) for receiving an engagement tailpiece (20a, 20b) formed on said second element (32).

5. A junction member as claimed in claim 3, **characterized in that** the restraining means (24) to keep the second body (15) to the first position or to the second position comprises a pusher element (25) operatively active on the rear portion (16) of said second body (15).

6. A junction member as claimed in claim 5, **characterized in that** the pusher element (25) acts in thrust relationship either against a first notch (27a) of the rear portion (16) of the second body (15) to keep said second body (15) to the first position, or against a second notch (27b) of the rear portion (16) of the second body (15) to keep said second body (15) to the second position.

7. A junction member as claimed in claim 5 or 6,
**characterized in that** it further comprises spring means (26) operatively active on the pusher element (25) to keep said pusher element (25) in contact relationship with the second body (15).

8. A junction member as claimed in claim 4, **characterized in that** it further comprises tightening means (29) to fasten the pusher element (25) to the first position of the second body (15).

9. A junction member as claimed in claim 1, **characterized in that** in a plan view it has a substantially U-shaped conformation defining a passage space (11).

10. A partition comprising:
- a first plurality (3a) of beams (3);
- a second plurality (3b) of beans (3); each of the beams (3) of said second plurality (3b) being connected to at least one beam (3) of the first plurality (3a), to form a support structure (2);
- a plurality of panels (4) in engagement with said support structure (2);
**characterized in that** it comprises a plurality of junction members (5) according to anyone of the preceding claims which are operatively active between the beams (3) of the first plurality (3a) and of the second plurality (3b).

11. A partition as claimed in claim 10, **characterized in that** each beam (3) of the second plurality (3b) comprises at least one pair of engagement tailpieces (20a, 20b); the tailpieces of said at least one pair (20a, 20b) being mutually spaced apart along an extension direction (Y) and extending in opposite ways with respect to each other along said extension direction (Y).

12. A partition as claimed in claim 11, **characterized in that** each tailpiece of said pair of engagement tailpieces (20a, 20b) defines a respective housing (21) and each engagement end (12, 13) of the junction member (5) has a tooth (18) defining a respective space (19); the engagement tailpiece (12, 13) being insertable in said space (19) and the tooth (18) being receivable in said housing (21).

13. A partition as claimed in claim 11 **characterized in that** each engagement tailpiece (20a, 20b) extends along the whole longitudinal extension of each beam (3) at least of said second plurality (3b).

14. A partition as claimed in claim 11, **characterized in that** each beam (3) of at least said second plurality (3b) seen in cross-section comprises a closed profile (30) mainly extending along an axis (W) parallel to the extension direction (Y) of the pair of engagement tailpieces (20a, 20b).

15. A partition as claimed in claim 14, **characterized in that** each beam (3) of at least said second plurality (3b) comprises two pairs of engagement tailpieces (20a, 20b) extending along the whole longitudinal extension of said beam (3) and in cross-section having a symmetric arrangement relative to the axis (W).

16. A partition as claimed in claim 10 **characterized in that** each junction member (5) is fitted on one end (6a, 6b) of a beam (3) of said first plurality (3a) of beams.
